(19) Europäisches Patentamt
European Patent Office
Office européen des brevets

(11) Veröffentlichungsnummer: **0 102 496**
**B1**

(12) # EUROPÄISCHE PATENTSCHRIFT

(45) Veröffentlichungstag der Patentschrift: **15.10.86**

(51) Int. Cl.[4]: **C 09 D 5/44**, C 25 D 13/06, C 08 G 59/00, C 08 G 18/00, C 09 D 3/58, C 09 D 3/72, C 08 G 18/08

(21) Anmeldenummer: **83107132.9**

(22) Anmeldetag: **21.07.83**

(54) **Selbstvernetzendes, hitzehärtbares Bindemittel.**

(30) Priorität: **07.09.82 DE 3233140**

(43) Veröffentlichungstag der Anmeldung: **14.03.84 Patentblatt 84/11**

(45) Bekanntmachung des Hinweises auf die Patenterteilung: **15.10.86 Patentblatt 86/42**

(84) Benannte Vertragsstaaten: **AT BE CH DE FR GB IT LI NL SE**

(56) Entgegenhaltungen:
**EP-A-0 004 090**
**EP-A-0 025 554**
**EP-A-0 025 555**
**EP-A-0 093 241**

(73) Patentinhaber: **BASF Lacke + Farben Aktiengesellschaft, Max- Winkelmann- Strasse 80, D-4400 Münster (DE)**

(72) Erfinder: **Geist, Michael, Dr. Dipl.- Chem., Rubensstrasse 251, D-4400 Münster (DE)**
Erfinder: **Diefenbach, Horst, Dr. Dipl.- Chem., Am Lerchenhain 8, D-4405 Nottuln (DE)**

(74) Vertreter: **Habbel, Hans- Georg, Dipl.- Ing., Postfach 3429 Am Kanonengraben 11, D-4400 Münster (DE)**

**EP 0 102 496 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein selbstvernetzendes, hitzehärtbares Bindemittel, insbesondere für Elektrotauchlacke, auf der Basis eines organischen Kunstharzes, das Hydroxylgruppen und veresterte Carboxylgruppen enthält und durch partielle oder vollständige Neutralisation von im Harz enthaltenden tertiären Aminogruppen mit Säure und/oder durch im Harz enthaltene quartare Ammoniumgruppen wasserverdünnbar ist.

Aus der DE-OS 29 35 411 ist ein Lacküberzugsmittel bekannt, das ein Kunstharz enthält, das primäre und/oder sekundäre und gegebenenfalls auch tertiäre Aminogruppen sowie endständige veresterte Carboxylgruppen enthält, wobei die Estergruppen in neutralem wässrigem Medium weitgehend stabil sind, jedoch in basischem Medium bei erhöhten Temperaturen gegenüber den primären und/oder sekundären Aminogruppen des Kunstharzes reaktionsfähig sind. Gemäß dem Beispiel der DE-OS 29 36 411 wird 25 Minuten bei 180° C eingebrannt.

Als Alkoholkomponente der Carboxylestergruppen werden bei diesem bekannten Kunstharz ausschließlich Monoalkohole verwendet, die 1 bis 18, bevorzugt 1 bis 6 Kohlenstoffatome im Molekül enthalten. Besonders bevorzugt werden niedrigsiedende Alkohole mit einem Siedepunkt unter 140 °C. Die Reaktionsfähigkeit der Ester wird durch die Erhöhung der elektrophilen Aktivität der Carboxylgruppe gesteigert. Als besonders geeignet wird der Einbau von Methyl-, Ethyl- und/oder Propylestern der Milchsäure bzw. der Dimethylolpropionsäure bezeichnet. Die Verwendung von Monoalkoholen als Veresterungskomponente bringt den Nachteil mit sich, daß die erhaltenen Carboxylestergruppen trotz ihrer Aktivierung in der Carbonsäurekomponente nicht ausreichend reaktionsfähig sind.

In der EP 12463 werden fremd- und selbstvernetzende (Präkondensate) Bindemittel beschrieben, die durch Transesterifikation von β-Hydroxyalkylester vernetzen. Die Reaktion wird durch die Katalyse von Schwermetallsalzen beschleunigt.

Es ist Aufgabe der Erfindung, hitzehärtbare Bindemittel zu schaffen, die im Hinblick auf die Vernetzung beim Einbrennen eine erhöhte Reaktivität aufweisen. Hierdurch sollen einerseits günstige Einbrennbedingungen und andererseits eine effektive Vernetzung erreicht werden.

Überraschenderweise wurde nun gefunden, daß Bindemittel mit verbesserten Eigenschaften im Hinblick auf ihre Herstellung, die Qualität der resultierenden Überzüge und insbesondere die Einbrennbedingungen erhalten werden, wenn die in ihnen enthaltenen Carboxylestergruppen in der Alkoholkomponente durch einen Substituenten, der einen negativen induktiven Effekt bewirkt, aktiviert sind.

Gegenstand der Erfindung ist also ein Hydroxylgruppen und veresterte Carboxylgruppen enthaltendes Bindemittel der eingangs genannten Art, das dadurch gekennzeichnet ist, dan die veresterten Carboxylgruppen Carbalkoxymethylestergruppen sind.

Die erfindungsgemäßen Bindemittel bieten folgende Vorteile: Die verwendeten Alkoholkomponenten, d. h. die Hydroxyessigsäureester, sind besonders günstige austretende Gruppen, wodurch eine effektive Aktivierung der Carboxylestergruppen erreicht wird. Dies wiederum führt zu einer wirksamen Vernetzung im endgültig resultierenden Film.

Weiterhin können die erfindungsgemäßen in der Alkoholkomponente aktivierten Carboxylestergruppen günstig hergestellt werden. Es handelt sich um Reaktionen, die unter milden Bedingungen durchgeführt werden können. Hierdurch werden Nebenreaktion, wie beispielsweise Umesterungen, vermieden, und es entsteht ein einheitlicheres Produkt. Ein weiterer Vorteil der erfindungsgemäßen Bindemittel liegt darin, daß die beim Einbrennen freigesetzten Verbindungen, nämlich die Hydroxyessigsäureester, besonders gute Verlaufmittel sind, durch die Überzüge mit einer sehr guten Oberfläche erzielt werden. So ist beispielsweise der Hydroxyessigsäureethylester als solcher bereits als Verlaufmittel bekannt, und durch die Erfindung wird es möglich gemacht, diese Verbindung beim Einbrennen freizusetzen, wodurch ein besonders guter Effekt erzielt wird. Im Gegensatz dazu besteht bei der Freisetzung niedrigsiedender Alkohole die Gefahr von sogenannten Kochern und anderen Filmstörungen im Überzug.

Das erfindungsgemäße Kunstharz wird besonders bevorzugt als Bindemittel für kathodisch abscheidbare Elektrotauchlacke verwendet. Hierbei kann es auch vorteilhaft in Kombination mit einem feinteiligen, festen Harz nach dem sogenannten EPC-Verfahren (electro powder coating-Verfahren) abgeschieden werden. Das Kunstharz ist aber auch als Bindemittel für konventionelle, lösungsmittelhaltige Einbrennlacke und für Pulverlacke geeignet.

Die erhaltenen Überzugsmittel können für den Fachmann selbstverständlich zusätzlich Pigmente, Füllstoffe, Vernetzungskatalysatoren, Korrosionsinhibitoren sowie weitere bekannte Lackhilfsmittel enthalten.

Während des Einbrennens reagieren nun die Carbalkoxymethylestergruppen mit den Hydroxylgruppen unter Abspaltung von Hydroxyessigsäureestern und Ausbildung von neuen Esterbindungen. Der Vernetzungsmechanismus kann im Prinzip durch folgendes Reaktionsschema beschrieben werden:

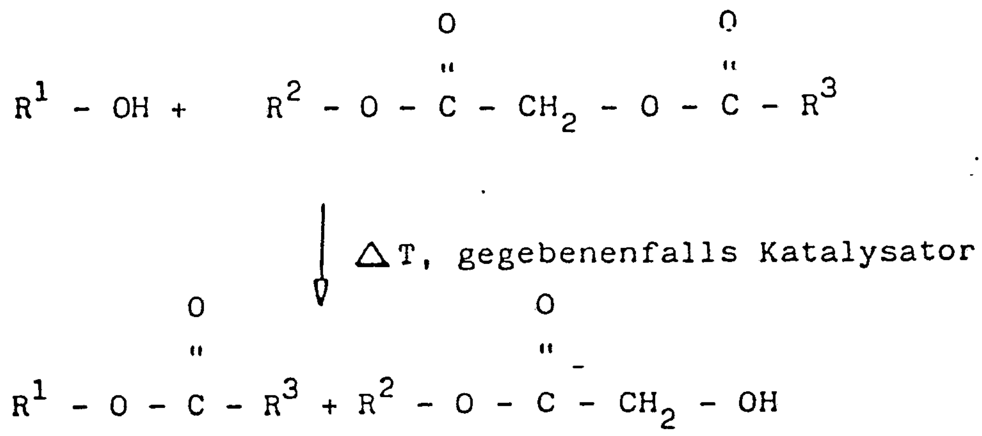


$R^1$, $R^3$ = Bindemittelmolekül
$R^2$ = Alkyl

Die abgespaltenen Hydroxyessigsäureester weisen vorzugsweise einen Siedepunkt auf, der in der Nähe der Einbrenntemperatur liegt, so daß sie während des Einbrennvorganges als besonders wirksame Verlaufsmittel wirken.

Dieser Vernetzungsmechanismus bedingt eine hohe Beständigkeit des Lackfilms gegen Lösungsmittel, Alkalien und Salzsprühnebel. Bereits auf nicht vorbehandeltem Eisenblech bilden die Filme auch ohne Korrosionsschutzinhibitoren sehr resistente Überzüge aus.

Vorteilhaft enthält das Kunstharz 1 bis 5 Hydroxylgruppen und 1 bis 5 aktivierte Estergruppen pro 1.000 Molekulargewichtseinheiten.

Das Äquivalenzverhältnis zwischen den Hydroxylgruppen und den Carbalkoxymethylestergruppen beträgt vorteilhaft 2: 1 bis 1: 2, wobei ein Äquivalenzverhältnis von etwa 1: 1 besonders bevorzugt wird.

Das Bindemittel ist also ein organisches Kunstharz, das Hydroxylgruppen und Carbalkoxymethylestergruppen als reaktive Gruppen enthält.

Um das Bindemittel in Wasser verdünnbar zu machen, enthält es tertiäre Aminogruppen, die partiell oder vollständig mit Säure neutralisiert werden. Die Wasserverdünnbarkeit kann auch durch den Einbau von Ammoniumgruppen erzielt werden.

Zur Herstellung der erfindungsgemäßen selbstvernetzenden hitzehärtbaren Bindemittel erweisen sich epoxidgruppenhaltige Harze mit vorzugsweise endständigen Epoxidgruppen aus der Gruppe der Polyglycidylether, Polyglycidylester und der Polyglycidylamine als besonders geeignet. Das Kunstharz ist demnach vorteilhaft hergestellt worden durch Umsetzung eines Polyglycidylesters oder -ethers mit einer Verbindung, die 2 gegenüber Epoxidgruppen reaktive Gruppen und mindestens eine Carbalkoxymethylestergruppe trägt, zu einem Zwischenprodukt mit endständigen Epoxidgruppen und Umsetzung dieser Epoxidgruppen unter Ringöffnung mit einem sekundären Amin oder einem am Stickstoffatom blockierten Aminoalkohol.

Unter Polyglycidylether im Rahmen dieser Erfindung werden vorzugsweise solche Polyglycidylether der allgemeinen Formel

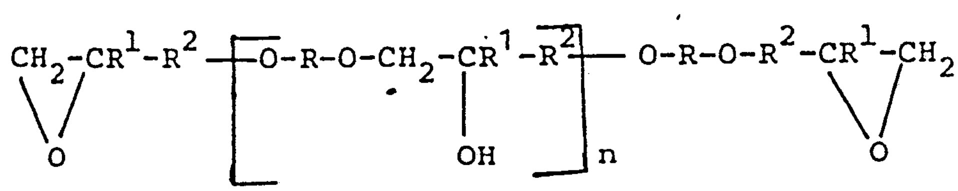

mit

R = 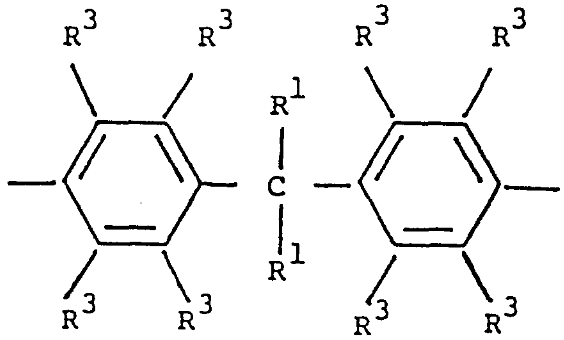

$R^1 = H$ oder $C_nH_{2n+1}$
$R^2 = \left(CR^1_2\right)_n$
$R^3 = R^1$, Halogen und bevorzugt H
$n = 0$ bis 5
verstanden.

Die Epoxidharze können auch hydriert oder teilhydriert eingesetzt werden. Zur Steuerung der Filmeigenschaften können ein Teil oder alle der reaktionsfähigen Gruppen des Epoxidharzes mit anderen Verbindungen umgesetzt werden. Hierfür bieten sich an:

a) Carboxylgruppenhaltige Verbindungen wie gesättigte oder ungesättigte Monocarbonsäuren (z. B. Benzoesäure, Leinölfettsäure, 2-Ethylhexansäure, Versaticsäure, aliphatische, cycloaliphatische und/oder aromatische Dicarbonsäuren verschiedener Kettenlängen (z. B. Adipinsäure, Sebacinsäure, Isophthalsäure oder dimere Fettsäuren), Hydroxyalkylcarbonsäuren (z. B. Milchsäure, Dimethylolpropionsäure) sowie carboxylgruppenhaltige Polyester oder

b) Aminogruppenhaltige Verbindungen wie Diethylamin oder Ethylhexylamin oder Diamine mit sekundären Aminogruppen, wie z. B. N,N'-Dialkylendiamin wie Dimethylethylendiamin, N,N'-Dialkylpolyoxyalkylenamin wie N,N'-Dimethyl-polyoxypropylendiamin, Polyaminoamide wie Versamide oder das Umsetzungsprodukt von einem Mol Diaminohexan mit zwei Molen Monoglycidylether oder Monoglycidylester, speziell Clycidylester α-verzweigter Fettsäuren wie der Versaticsäure, oder

c) Hydroxylgruppenhaltige Verbindungen wie Neopentylglykol, bisethoxyliertes Neopentylglykol, Hydroxypivalinsäureneopentylglykolester, Dimethylhydantoin-N,N'diethanol, Hexandiol-1,6, Hexandiol-2,5, Buten-2-diol-1,4, Butin-2-diol-1,4, Hexin-3-diol-2,5 oder andere Alkindiole, 1,4-Bis-(hydroxymethyl)-cyclohexan, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin oder Tris-(hydroxymethyl)aminomethan-cyclohexanketimin sowie auch Polyglykolether, Polyesterpolyole, Polyetherpolyole, Polycaprolactonpolyole, verschiedener Funktionalität und Molekulargewichte.

Als Polyglycidylester sind Umsetzungsprodukte von Terephthalsäurebisglycidylester oder Isophthalsäurebisglycidylester mit der die aktivierte Estergruppe tragenden Komponente geeignet.

Zur Steuerung der Filmeigenschaften kann ein Teil der verbliebenen, reaktiven Glycidylgruppen mit anderen Verbindungen umgesetzt werden. Hierfür bieten sich die oben unter a, b und c genannten Verbindungen an.

Eine weitere vorteilhafte Ausgestaltung der Erfindung ist dadurch gekennzeichnet, daß das Kunstharz ein Polyurethanharz ist, das hergestellt worden ist durch Umsetzung eines Diisocyanats mit einer Verbindung, die gegenüber Isocyanatgruppen reaktive Gruppen und mindestens eine Carbalkoxymethylestergruppe trägt, zu einem Zwischenprodukt mit endständigen Isocyanatgruppen und Umsetzung dieser Isocyanatgruppen mit einem sekundären Amin oder einem am Stickstoffatom blockierten Aminoalkohol.

Geeignet sind auch Copolymerisate von Acrylsäureester und/oder Methacrylsäureester, die z.B. Acrylsäure und/oder Methacrylsäureglycidylester oder eine andere, eine Glycidylgruppe tragende, olefinisch ungesättigte, polymerisierbare Verbindung sowie Carbalkoxymethylacrylat und/oder Carbalkoxymethylmethacrylat enthalten. Die Glycidylgruppen können in einem weiteren Reaktionsschritt mit der die Aminogruppen tragenden Verbindung modifiziert werden.

In der zu polymerisierenden Monomerenmischung können jedoch auch geeignete, aminogruppenhaltige Monomere eingesetzt werden, unter der Voraussetzung, daß es sich um tertiäre Aminogruppen handelt.

Die Copolymerisate weisen bevorzugt eine zahlenmittlere Molmasse von 700 bis 15.000 auf. Bevorzugte Monomere sind Acryl- und Methacrylsäureester mit 1 bis 8 Kohlenstoffatomen im Alkoholrest. Die Copolymerisate können jedoch auch weitere Monomere, wie (Meth)-acrylamid, Styrol, Vinyltoluol oder Vinylcarbazol, enthalten. Die Copolymerisation erfolgt in wohlbekannter Weise durch Lösungs-, Suspensions- oder Emulsionspolymerisation unter Zusatz von Initiatoren, wie Peroxiden, Hydroperoxiden, Perestern oder thermolabilen Azoverbindungen sowie gegebenenfalls von Molekulargewichtsreglern.

Das Einführen der Aminogruppen in das organische Harz erfolgt vorzugsweise durch Reaktion eines Polyamins mit Harzen, die mindestens eine, vorzugsweise mindestens zwei Epoxidgruppen oder

Isocyanatgruppen oder eine andere, geeignete reaktive Gruppe je Molekül enthalten.

Zur Einführung der aktivierten Estergruppen in das Bindemittel eignen sich insbesondere Verbindungen mit einer oder mehreren Carbonsäuregruppen neben weiteren reaktiven Gruppen, die den Einbau in das Bindemittel ermöglichen. Die Carbonsäuregruppe kann vor oder nach dem Einbau in das Bindemittel in die gewünschte Carbalkoxymethylestergruppe überführt werden. Verbindungen, die diese Reaktionsmöglichkeiten besitzen, sind z. B: Dihydroxymonocarbonsäuren wie 2,2-Bis-(hydroxymethyl)-propionsäure, 4,4(4,4'-Bis-hydroxyphenyl)-valeriansäure, 3,5-Dihydroxy-benzoesäure, Dihydroxydicarbonsäuren wie Weinsäure, 1,1-Methylenbis-(2-hydroxy-3-naphthoesäure) und Aminocarbonsäuren wie 11-Aminoundekansäure, 3-Aminopropionsäure, 4-Aminobenzoesäure.

Diese, die aktivierte Estergruppe enthaltenden Verbindungen können über ihre reaktive Gruppen, insbesondere über Hydroxy- oder Aminogruppen, mit reaktiven Gruppen im Harzbindemittel umgesetzt werden. Das Harzbindemittel weist hierzu bevorzugt Epoxid- oder Isocyanatgruppen auf. Die reaktiven Gruppen können im Bindemittel endständig oder längs der Molekülkette eingebaut sein.

Für die Elektrotauchlackierung ist es erforderlich, daß die Bindemittelmischung nach Protonisierung mit Säure in Form einer wäßrigen Lösung oder Dispersion vorliegt.

Die Wasserlöslichkeit des Bindemittels wird durch Neutralisation der in ihnen enthaltenden tertiaren Aminogruppen mit Säuren bewirkt. Geeignete Säuren sind insbesondere organische Säuren, es kann jedoch auch beispielsweise Salzsäure oder Phosphorsäure eingesetzt werden. Bevorzugt werden die Aminogruppen mit Ameisensäure, Essigsäure, Malonsäure, Milchsäure oder Zitronensäure neutralisiert.

Die genannten Säuren können auch verwendet werden, wenn die Einführung der solubilisierenden Gruppen durch Anlagerung einer Ammoniumgruppen an das Bindemittel erfolgt.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden: Die Säure wird in Wasser, gegebenenfalls zusammen mit Dispergierhilfsmittel, vorgelegt und die Harzlösung wird bei Raumtemperatur oder gegebenenfalls bei erhöhten Temperaturen in das Wasser eingerührt. Die Säure kann aber auch direkt der Harzlösung zugegeben werden. Die neutralisierte Harzlösung kann nun in das Wasser eingerührt werden, gegebenenfalls kann man das Wasser auch langsam in die Harzlösung einarbeiten.

Die Dispersion kann zur Steuerung ihrer Viskosität, der Abscheidespannung und des Verlaufs bis zu 20 % organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wässrigen Dispersion ab. Vorteilhaft für die Summe aller Eigenschaften ist ein möglichst geringer Anteil an organische Lösungsmittel enthalten.

Der Festkörper eines Abscheidebades, das mit den erfindungsgemäßen Bindemitteln angesetzt ist, beträgt 7 bis 35 Gew.-Teile, bevorzugt aber 12 bis 25 Gew.-Teile. Der pH-Wert des Abscheidebades liegt zwischen 4 und 8, vorzugsweise aber zwischen 5 und 7,5. Als Anoden des Abscheidebades werden nichtkorrodierende Stahlanoden oder Graphitanoden verwendet. Die Temperatur des Badansatzes soll zwischen 15 bis 35 °C, bevorzugt zwischen 20 und 30 °C liegen. Die Abscheidedauer und -spannung werden so gewählt, daß die gewünschte Schichtstärke erreicht wird.

Nach der Abscheidung wird der beschichtete Gegenstand abgespült und ist zum Einbrennen bereit.

Unabhängig von dem Applikationsverfahren der auf Basis des erfindungsgemäßen Bindemittels hergestellten Überzugsmittel erfolgt die Vernetzung des Lackfilms während des Einbrennens bei Temperaturen von 130 bis 200 °C über eine Seitdauer von 10 bis 60 Minuten, bevorzugt bei 150 bis 180 °C während 15 bis 30 Minuten.

Die Veresterungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylcetylammoniumbromid oder Tetraammoniumjodid oder organische Zinnverbindungen wie Dibutylzinndilaurat und Eisen-IIIacetylacetonat, Zinkacetat, Zink-2-ethylhexoat, Kobaltnaphthenat, Bleiacetat, Bleioctoat oder Butyltitanat.

Die Pigmentierung erfolgt in wohlbekannter Weise. Hierbei werden die Pigmente sowie die üblichen Zusatzstoffe wie Füllstoffe, Korrosionsschutzinhibitoren und Antischaummittel in dem Bindemittel angemahlen. Als Mahlaggregate können z. B. Sandmühlen, Kugelmühlen oder Dreiwalzen verwendet werden.

Die Komplettierung des Lackes kann, wie allgemein bekannt, erfolgen.

Die Erfindung betrifft auch ein Verfahren zur Herstellung eines Bindemittels insbesondere für Elektrotauchlacke, das dadurch gekennzeichnet ist, daß ein Polyglycidylester oder -ether mit einer Verbindung, die gegenüber Epoxidgruppen reaktive Gruppen und mindestens eine Carbalkoxymethylestergruppe trägt, umgesetzt wird.

Die Erfindung betrifft auch ein Verfahren zur Herstellung eines Bindemittels insbesondere für Elektrotauchlacke, das dadurch gekennzeichnet ist, daß ein Diisocyanat mit einer Verbindung, die gegenüber Isocyanatgruppen reaktive Gruppen und mindestens eine Carbalkoxymethylestergruppe trägt, umgesetzt wird.

Die Erfindung betrifft weiterhin die Verwendung der Bindemittel zur Herstellung von Elektrotauchbädern für das Elektrotauchlackierverfahren.

Die Erfindung betrifft ferner ein Verfahren zum Herstellen von Überzügen, bei dem ein elektrisch leitendes Substrat in ein wässriges Elektrotauchbad, das mindestens teilweise durch Säure neutralisiertes Bindemittel auf der Basis eines Hydroxylgruppen veresterte Carbalkoxymethylestergruppen und tertiäre Aminogruppen

und/oder Ammoniumgruppen enthaltenden organischen Kunstharzes enthält, eingetaucht und als Kathode geschaltet wird, durch Gleichstrom ein Film auf dem Substrat abgeschieden wird, das Substrat aus dem Bad entfernt wird und der Film durch Einbrennen zu einem Überzug gehärtet wird, dadurch gekennzeichnet, daß die veresterte Carboxylgruppen des Kunstharzes Carbalkoxymethylestergruppen sind und beim Einbrennen mit den Hydroxylgruppen des Bindemittels unter Bildung von Estergruppen umgesetzt werden.

Die Erfindung betrifft schließlich auch ein mit einem Überzug versehenes Substrat, das nach dem beschriebenen Verfahren hergestellt worden ist.

Im folgenden wird die Erfindung anhand von Beispielen näher erläutert.

**Vorprodukt 1**

Darstellung von 2,2-Bis-(hydroxymethyl)-propionsäure-carbmethoxymethylester

In einem 5 l - Reaktionsgefäß mit Rührer, Innenthermometer, Rückflußkühler und 1 l - Tropftrichter werden 550 g 2,2 Bis-(hydroxymethyl)-propionsäure mit 2460 g Cyclohexanon vorgelegt und auf 100°C erhitzt. Nachdem der größte Teil der Dihydroxycarbonsäure in Lösung gegangen ist, kühlt man auf 60°C ab und tropft 414 g Triethylamin zu. Die Temperatur wird durch Kühlung auf 60°C gehalten. Das entstehende Triethylammonium-2,2-bis-(hydroxymethyl)-propionat bleibt in Lösung. Hierauf gibt man 7 g Kaliumjodid zu und tropft 565 g Chloressigsäuremethylester während 30 Minuten zu. Man hält den Ansatz für weitere 4 Stunden bei dieser Temperatur, läßt ihn auf Raumtemperatur abkühlen und filtriert das gebildete Triethylammoniumchlorid ab. Das Filtrat wird am Rotationsverdampfer eingeengt und anschließend mit Xylol auf einen Festkörper von 90 % eingestellt.

**Vorprodukt 2**

Darstellung von 4,4-(4,4' Dihydroxydiphenyl-)pentan-säurecarbethoxymethylester

In einem 4 l Reaktionsgefäß werden 1144 Teile 4,4-(4,4' Dihydroxydiphenyl)-pentansäure und 1716 Teile Methylisobutylketon vorgelegt. Nachdem die Säure gelöst ist, werden 404 Teile Triethylamin zugetropft. Hierbei steigt die Temperatur an. Nach dem Ende des Zutropfens läßt man noch eine Stunde bei 50°C nachreagieren. Man kühlt auf Raumtemperatur ab und trennt danach das entstandene Ammoniumsalz ab.

1500 Teile des Ammoniumsalzes werden mit 1500 Teile Butylglykol in Lösung gebracht. Man gibt 2,5 Teile Kaliumjodid zu und tropft bei 40°C 370 Teile Chloressigsäureethylester zu. Nach Beenden des Zutropfens erhöht man die Temperatur auf 60°C und läßt 5 h nachreagieren. Man kühlt auf Raumtemperatur ab und trennt das Triethylammoniumchlorid ab. Das Filtrat wird im Vakuum eingeengt. Danach setzt man 310 Teile Solvesso 150 (Aromatengemisch der Esso AG, Siedebereich 187-207°C) zu und destilliert hiervon im Vakuum 155 Teile ab, um das Butylglykol vollständig zu verdrängen. Der Festkörper wird auf 90 % eingestellt.

**Beispiel 1**

Herstellen einer Bindemitteldispersion

In einem 4 l - Reaktionsgefäß werden 1410 Teile eines handelsüblichen Epoxidharzes auf Basis Bisphenol A (Epoxidäquivalentgewicht 188), 690 Teile des Vorprodukts 1 und 38 Teile Xylol vorgelegt. Die Mischung wird auf 83°C erhitzt. Dann setzt man 9 Teile Dimethylbenzylamin zu. Die Reaktion setzt exotherm ein. Durch Kühlen hält man die Temperatur auf 95°C. Im Verlauf von 7 Stunden erhöht man die Temperatur auf 110°C. Ist ein Epoxidäquivalentgewicht von 1280 erreicht, gibt man 158 Teile Diethanolamin zu und läßt die Reaktionstemperatur auf 115°C ansteigen. Nach einer Stunde setzt man 142 Teile Hexylglykol und 44 Teile Bleioctoat zu und mischt unter.

Inzwischen wird ein Dispergierbad aus 1604 Teilen entionisiertem Wasser, 37 Teilen einer Emulgatorlösung und 27 Teilen Eisessig vorbereitet. Hierzu werden 2100 Teile der Harzlösung dispergiert. Nach einer Stunde werden weitere 2468 Teile entionisiertes Wasser zugesetzt.

Das Wasser wird eine halbe Stunde untergemischt. Danach wird die Dispersion filtriert. Der Festkörper der Dispersion liegt bei 37,2 %.

**Beispiel 2**

Herstellung einer Bindemitteldispersion

Die Synthese von Beispiel 1 wird mit Vorprodukt 2 an Stelle Vorprodukt 1 wiederholt.

Einwaagen Harzsynthese (in Teilen)

Epoxidharz: 1306
Vorprodukt 2: 1148
Xylol: 34
Dimethylbenzylamin: 6
Diethanolamin: 146
Hexylglykol: 161
Bleioctoat: 50
Einwaagen Dispergierbad (in Teilen)
Harz: 2100
Eisessig: 48
Emulgatorlösung: 37
entionisiertes Wasser: 1793
entionisiertes Wasser: 2034
Festkörper der Dispersion 36,4 %.

**Beispiel 3**

**Herstellung einer Harzlösung**

In einem geeigneten 4 l-Reaktor werden 1410 Teile eines handelsüblichen Epoxidharzes auf Basis Bisphenol A (Epoxidäquivalentgewicht 188) und 621 Teile des Vorprodukt 1 vorgelegt. Hierzu werden noch 107 Teile Xylol zugegeben. Die Mischung wird auf 90°C erhitzt. Dann fügt man 7 Teile Dimethylbenzylamin zu und läßt die Temperatur auf 105°C ansteigen. Wenn das Epoxidäquivalentgewicht von 1280 erreicht ist, fügt man 486 Teile eines Dimethylethanolamin - Milchsäureaddukts (69 % in eine Butylglykol-Wassermischung) bei 80°C zu. Man hält diese Temperatur für 6 Stunden und gibt dann Butylglykol zu, um einen Festkörper von 60 % einzustellen. Die Harzlösung kann als Reibharz zur Herstellung einer Pigmentpaste verwendet werden.

**Herstellung einer Pigmentpaste**

Mit der im Beispiel 3 beschriebenen Harzlösung wurde entsprechend folgender Rezeptur eine graue Pigmentpaste zubereitet.
Titandioxid 1998 Teile
Aluminiumsilikat 448 Teile
Bleipigment 118 Teile
Ruß 32 Teile
Bentone 29 Teile
Eisenoxidpigment 16 Teile
entionisiertes Wasser 2480 Teile
Harzlösung 1716 Teile
Butylglykol 122 Teile
Diese Komponenten wurden gemischt und in einer Kugelmühle während 70 Stunden auf eine Feinheit von 6 - 8 µm gemahlen.

**Zubereitung der Abscheidebader**

Die Dispersionen von Beispiel 1 und 2 werden mit der oben beschriebenen Pigmentpaste zu Elektrotauchbädern komplettiert.
Beispiel A Beispiel B
Basis Basis
Dispersion 1 Dispersion 2
Entionisiertes Wasser 2000 Teile 2000 Teile
10 %ig Essigsäure 25 Teile 25 Teile
Dispersion 1838 Teile 1879 Teile
Pigmentpaste 775 Teile 775 Teile
Entionisiertes Wasser 362 Teile 321 Teile
Die Bäder werden bei Raumtemperatur 3 Tage gealtert. Dann werden zinkphosphatierte Stahlbleche, die als Kathode geschaltet werden, in dem Lackbad beschichtet. Die Abscheidung erfolgt während 2 Minuten bei einer Badtemperatur von 23°C. Die Härtung der abgeschiedenen Filme erfolgt im Umluftofen während 20 Minuten bei 185°C.

Beispiel A Beispiel B
5 Schichtstärke 18,3 µm 19,7 µm
Krater 1) 0 0 - 1
Verlauf 1) 1 1,5
MIBK-Test 2) kein Anlösen kein Anlösen
Erichsentiefung 7,2 mm 6,8 mm
1) Bester Wert 0, schlechtester Wert 5
2) MIBK-Test: Das Anlösen bzw. Qullen des Filmes wird nach einer Belastung von 20 Doppelhüben mit Methyl-isobutylketon bewertet.

**Patentansprüche**

1. Selbstvernetzendes, hitzehärtbares Bindemittel, insbesondere für Elektrotauchlacke, auf der Basis eines organischen Kunstharzes, das Hydroxylgruppen und veresterte Carboxylgruppen enthält und durch partielle oder vollständige Neutralisation von im Harz enthaltenen tertiären Aminogruppen mit Säure und/oder durch im Haiz enthaltene quartäre Ammnniumgruppen wasserverdünnbar ist, dadurch gekennzeichnet, daß die veresterten Carboxylgruppen Carbalkoxymethylestergruppen sind.

2. Bindemittel nach Anspruch 1, dadurch gekennzeichnet, daß das Kunstharz 1 bis 5 Hydroxylgruppen und 1 bis 5 Carbalkoxymethylestergruppen pro 1.000 Molekulargewichtseinheiten enthält.

3. Bindemittel nach Anspruch 1 oder 2, dadurch gekennzeichnet, daß das Aquivalentverhältnis zwischen den Hydroxylgruppen und den Carbalkoxymethylestergruppen 2: 1 bis 1: 2 beträgt.

4. Bindemittel nach Anspruch 1 bis 3, dadurch gekennzeichnet, daß das Kunstharz ein Epoxidharz ist, das hergestellt worden ist durch Umsetzung eines Polyglycidylesters oder -ethers mit einer Verbindung, die 2 gegenüber Epoxidgruppen reaktive Gruppen und mindestens eine Carbalkoxymethylestergruppe trägt, zu einem Zwischenprodukt mit endständigen Epoxidgruppen und Umsetzung dieser Epoxidgruppen unter Ringöffnung mit einem sekundären Amin oder einem am Stickstoffatom blockierten Aminoalkohol.

5. Bindemittel nach Anspruch 1 bis 3, dadurch gekennzeichnet, daß das Kunstharz ein Polyurethanharz ist, das hergestellt worden ist durch Umsetzung eines Diisocyanats mit einer Verbindung, die gegenüber Isocyanatgruppen reaktive Gruppen und mindestens eine Carbalkoxymethylestergruppe trägt, zu einem Zwischenprodukt mit endständigen Isocyanatgruppen und Umsetzung dieser Isocyanatgruppen mit einem sekundären Amin oder einem am Stickstoffatom blockierten Aminoalkohol.

6. Verfahren zur Herstellung eines Bindemittels, insbesondere für Elektrotauchlacke, dadurch gekennzeichnet, daß ein Polyglycidylester oder -ether mit einer Verbindung, die gegenüber Epoxidgruppen reaktive Gruppen und mindestens eine Carbalkoxymethylestergruppe trägt, umgesetzt wird.

7. Verfahren zur Herstellung eines Bindemittels insbesondere für Elektrotauchlacke, dadurch gekennzeichnet, daß ein Diisocyanat mit einer Verbindung, die gegenüber Isocyanatgruppen reaktive Gruppen und mindestens eine Carbalkoxymethylestergruppe trägt, umgesetzt wird.

8. Verfahren nach Anspruch 6 oder 7, dadurch gekennzeichnet, daß die Molverhältnisse der verwendeten Ausgangsstoffe so gewählt werden, daß ein Bindemittel mit 1 bis 5 Hydroxylgruppen und 1 bis 5 Carbalkoxymethylestergruppen pro 1.000 Molekulargewichtseinheiten erhalten wird.

9. Verfahren nach Anspruch 6 bis 8, dadurch gekennzeichnet, daß die Molverhältnisse der Ausgangsstoffe so gewählt werden, daß ein Bindemittel mit einem Äquivalentsverhältnis zwischen den Hydroxylgruppen und den Carbalkoxymethylestergruppen von 2: 1 bis 1: 2 erhalten wird.

10. Verwendung der Bindemittel nach Anspruch 1 bis 5 zur Herstellung von Elektrotauchbädern für das Elektrotauchlackvierverfahren.

11. Verfahren zur Herstellung von Überzügen, bei dem ein elektrisch leitendes Substrat in ein wässriges Elektrotauchbad, das ein mindestens teilweise durch Säure neutralisiertes, Hydroxylgruppen, veresterte Carboxylgruppen und tertiäre Amino- und/oder Ammoniumgruppen enthaltendes Bindemittel auf der Basis eines organischen Kunstharzes enthält, eingetaucht und als Kathode geschaltet wird, durch Gleichstrom ein Film auf dem Substrat abgeschieden wird, das Substrat aus dem Bad entfernt wird und der Film durch Einbrennen zu einem Überzug gehärtet wird, dadurch gekennzeichnet, daß die veresterten Carboxylgruppen des organischen Kunstharzes Carbalkoxymethylestergruppen sind.

12. Verfahren nach Anspruch 11, dadurch gekennzeichnet, daß als Bindemittel ein Kunstharz verwendet wird, das 1 bis 5 Hydroxylgruppen und 1 bis 5 Carbalkoxymethylestergruppen pro 1.000 Molekulargewichtseinheiten enthält.

13. Verfahren nach Anspruch 11 oder 12, dadurch gekennzeichnet, daß als Bindemittel ein Kunstharz verwendet wird, das ein Äquivalentsverhältnis zwischen den Hydroxylgruppen und den Carbalkoxymethylestergruppen von 2: 1 bis 1: 2 aufweist.

14. Verfahren nich Anspruch 11 his 13, dadurch gekennzeichnet daß als Bindemittel ein Kunstharz verwendet wird, das hergestellt worden ist durch Umsetzung eines Polyglycidylesters oder -ethers mit einer Verbindung die 2 gegenüber Epoxidgruppen reaktive Gruppen und mindestens eine Carbalkoxymethylestergruppe trägt, zu einem Zwischenprodukt mit endständigen Epoxidgruppen und Umsetzung dieser Epoxidgruppen unter Ringöffnung mit einem sekundären Amin oder einem am Stickstoffatom blockierten Aminoalkohol.

15. Verfahren nach Anspruch 11 bis 13, dadurch gekennzeichnet, daß als Bindemittel ein Kunstharz verwendet wird, das hergestellt worden ist durch Umsetzung eines Diisocyanats mit einer Verbindung, die gegenüber Isocyanatgruppen reaktive Gruppen und mindestens eine Carbalkoxymethylestergruppe trägt, zu einem Zwischenprodukt mit endständigen Isocyanatgruppen und Umsetzung dieser Isocyanatgruppen mit einem sekundären Amin oder einem am Stickstoffatom blockierten Aminoalkohol.

16. Mit einem Überzug versehendes Substrat, hergestellt durch das Verfahren nach Anspruch 11 bis 15.

## Claims

1. A selfcrosslinking heat-hardenable binder, in particular for electropaints, which is based on an organic synthetic resin which contains hydroxyl groups an estirified carboxyl groups and which is water-dilutable by partial or complete acid-neutralization of tertiary amino and which is water-dilutable by partial or complete acid-neutralization of tertiary amino groups present in the resin, wherein the esterified carboxyl wroups are carbalkoxymethyl ester groups.

2. A binder as claimed in claim 1, wherein the synthetic resin contains 1 to 5 hydroxyl groups and 1 to 5 carbalkoxymithyl estir groups per 1,000 molecular weight units.

3. A binder as claimed in claim 1 or 2, wherein the equivalence ratio between the hydroxyl groups and the carbalkoyymethyl ester groups is 2: 1 to 1: 2.

4. A binder as claimed in claim 1 to 3, wherein the synthetic resin is an epoxy resin which has been prepared by reacting a polyglycidyl ester or ether with a compound which bears 2 groups which are reactive toward epoxide groups and at least one carbalkoxymethyl ester group to give an intermediate product having terminal epoxide groups and reacting these epoxide groups, by ring-opening, with a primary or secondary amine, or with an amino alcohol which is blocked at the nitrogen atom.

5. A binder as claimed in claim 1 to 3, wherein the synthetic resin is a polyurethane resin which has been prepared by reacting a diisocyanate with a compound which bears groups which are reactive toward isocyanate groups and at least one carbalkoxymethyl ester group to give an intermediate product having terminal isocyanate groups and reacting these isocyanate groups with a secondary amine or with an amino alcohol which is blocked at the nitrogen atom.

6. A process for preparing a binder, in particular for electropaints, which comprises reacting a polyglycidyl ester or ether with a compound which bears groups which are reactive toward epoxide groups and at least one carbalkoxymethyl ester group.

7. A process for preparing a binder, in particular for electropaints, which comprises reacting a diisocyanate with a compound which bears groups which are reactive toward isocyanate groups and at least one carbalkoxymethyl ester group.

8. A process as claimed in claim 6 or 7, wherein the molar ratios of the starting materials used are chosen so as to produce a binder which has 1 to 5 hydroxyl groups and 1 to 5 carbalkoxymethyl ester groups per 1,000 molecular weight units.

9. A process as claimed in claim 6 to 8, wherein the molar ratios of the starting materials are chosen in such a way as to produce a binder which has an equivalence ratio between the hydroxyl groups and the carbalkoxymethyl ester groups of 2: 1 to 1: 2.

10. Use of a binder as claimed in claim 1 to 5, for preparing electrocoating baths for the electrocoating process.

11. A process for preparing coatings by dipping an electrically conductive substrate into an aqueous electrocoating bath which contains an at least partially acid-neutralized binder which contains hydroxyl groups, esterified carboxyl groups and tertiary amino and/or ammonium groups and is based on an organic synthetic resin, and connecting it therein as the cathode, depositing a film on the substrate by direct current, removing the substrate from the bath, and baking the film to harden it into a coating, wherein the esterified carboxyl groups of the organic synthetic resin are carbalkoxymethyl ester groups.

12. A process as claimed in claim 11, wherein the binder used is a synthetic resin which contains 1 to 5 hydroxyl groups and 1 to 5 carbalkoxymethyl ester groups per 1,000 molecular weight units.

13. A process as claimed in claim 11 or 12, wherein the binder used is a synthetic resin which has an equivalence ratio between the hydroxyl groups and the carbalkoxymethyl ester groups of 2: 1 to 1: 2.

14. A process as claimed in claim 11 to 13, wherein the binder used is a synthetic resin which has been prepared by reacting a polyglycidyl ester or ether with a compound which bears 2 groups which are reactive toward epoxide groups and at least one carbalkoxymethyl ester group to give an intermediate product having terminal epoxide groups and reacting these epoxide groups, by ring-opening, with a secondary amine or with an amino alcohol which is blocked at the nitrogen atom.

15. A process as claimed in claim 11 to 13, wherein the binder used is a synthetic resin which has been prepared by reacting a diisocyanate with a compound which bears groups which are reactive toward isocyanate groups and at least one carbalkoxymethyl ester group to give an intermediate product having terminal isocyanate groups and reacting these isocyanate groups with a secondary amine or with an amino alcohol which is blocked at the nitrogen atom.

16. A coated substrate prepared by a process as claimed in claim 11 to 15.

**Revendications**

1.- Liant thermodurcissable auto-réticulable, en particulier pour peintures d'électrophorèse, à base d'une résine synthétique organique qui contient des groupes hydroxyle et des groupes carboxyle estérifiés et peut être diluée par l'eau par neutralisation partielle ou complète de groupes amine tertiaires contenus dans la résine avec de l'acide et/ou par des groupes ammonium quaternaire contenus dans la résine, caractérisé par le fait que les groupes carboxyle estérifiés sont des groupes ester de carbalcoxyméthyle.

2.- Liant selon la revendication 1, caractérisé par le fait que la résine synthétique contient 1 à 5 groupes hydroxyle et 1 à 5 groupes ester de carbalcoxyméthyle par 1000 unités de poids moléculaire.

3.- Liant selon l'une des revendications 1 et 2, caractérisé par le fait que le rapport d'équivalent entre les groupes hydroxyle et les groupes ester de carbalcoxyméthyle est de 2: 1 à 1: 2.

4.- Liant selon les revendications 1 à 3, caractérisé par le fait que la résine synthétique est une résine d'époxyde qui a été préparée par réaction d'un ester ou éther de polyglycidyle sur un composé qui porte 2 groupes réactifs vis-à-vis des groupes époxyde et au moins un groupe ester de carbalcoxyméthyle, donnant un produit intermédiaire à groupes époxyde terminaux et réaction de ces groupes époxyde, avec décyclisation, sur une amine secondaire ou un aminoalcool bloqué sur l'atome d'azote.

5.- Liant selon les revendications 1 à 3, caractérisé par le fait que la résine synthétique est une résine de polyuréthanne qui a été préparée par réaction d'un diisocyanate sur un composé qui porte des groupes réactifs vis-à-vis des groupes isocyanate et au moins un groupe ester de carbalcoxyméthyle, donnant un produit intermédiaire à groupes isocyanate terminaux et réaction de ces groupes isocyanate sur une amine secondaire ou un aminoalcool bloqué sur l'atome d'azote.

6.- Procédé pour la préparation d'un liant, en particulier pour peintures d'électrophorèse, caractérisé par le fait que l'on fait réagir un ester ou éther de polyglycidyle sur un composé qui porte des groupes réactifs vis-à-vis des groupes époxyde et au moins un groupe ester de carbalcoxyméthyle.

7.- Procédé pour la préparation d'un liant, en particulier pour peintures d'électrophorèse, caractérisé par le fait que l'on fait réagir un diisocyanate sur un composé qui porte des groupes réactifs vis-à-vis des groupes isocyanate et au moins un groupe ester de carbalcoxyméthyle.

8.- Procédé selon l'une des revendications 6 et 7, caractérisé par le fait que l'on choisit les rapports molaires des matières premières utilisées de façon telle que l'on obtienne un liant ayant 1 à 5 groupes hydroxyle et 1 à 5 groupes ester de carbalcoxyméthyle par 1000 unités de poids moléculaire.

9.- Procédé selon les revendications 6 à 6, caractérisé par le fait que l'on choisit les rapports molaires des matières premières de façon telle que l'on obtienne un liant ayant un rapport d'équivalent entre les groupes hydroxyle et les groupes ester de carbalcoxyméthyle de 2: 1 à 1: 2.

10.- Utilisation des liants selon les revendications 1 à 5 pour la préparation de bains d'électrophorèse pour le procédé de peinturage par électrophorèse.

11.- Procédé de réalisation de revêtement dans lequel on plonge un subjectile conducteur de l'électricité dans un bain aqueux d'électrophorèse qui contient un liant à base d'une résine synthétique organique contenant des groupes hydroxyle au moins partiellement neutralisés par de l'acide, des groupes carboxyle estérifiés et des groupes amine et/ou ammonium tertiaires et on la branche comme cathode, on dépose au moyen de courant continu un feuil sur le subjectile, on retire le subjectile du bain et on durcit le feuil en un revêtement par cuisson, caractérisé par le fait que les groupes caboxyle estérifiés de la résine synthétique organique sont des groupes ester de carbalcoxyméthyle.

12.- Procédé selon la revendication 11, caractérisé par le fait que l'on utilise comme liant une résine synthétique qui contient 1 à 5 groupes hydroxyle et 1 à 5 groupes ester de carbalcoxyméthyle par 1000 unités de poids moléculaire.

13.- Procédé selon l'une des revendications 11 et 12, caractérisé par le fait que l'on utilise comme liant une résine synthétique qui présente un rapport d'équivalent entre les groupes hydroxyle et les groupes ester de carbalcoxyméthyle de 2: 1 à 1: 2.

14.- Procédé selon les revendications 11 à 13, caractérisé par le fait que l'on utilise comme liant une résine synthétique qui a été préparée par réaction d'un ester ou éther de polyglycidyle sur un composé qui porte 2 groupes réactifs vis-à-vis des groupes époxyde et au moins un groupe ester de carbalcoxyméthyle, donnant un produit intermédiaire à groupes époxyde terminaux et réaction de ces groupes époxyde, avec décyclisation, sur une amine secondaire ou un aminoalcool bloqué sur l'atome de carbone.

15.- Procédé selon les revendications 11 à 13, caractérisé par le fait que l'on utilise comme liant une résine synthétique qui a été préparée par réaction d'un diisocyanate sur un composé qui porte des groupes réactifs vis-à-vis des groupes isocyanate et au moins un groupe ester de carbalcoxyméthyle, donnant un produit intermédiaire à groupes isocyanate terminaux et réaction de ces groupes isocyanate sur une amine secondaire ou un aminoalcool bloqué sur l'atome d'azote.

16.- Subjectile muni d'un revêtement, réalisé par le procédé selon les revendications 11 à 15.